# EUROPÄISCHE PATENTSCHRIFT

(11) **EP 1 163 985 B1**
(45) Veröffentlichungstag und Bekanntmachung des Hinweises auf die Patenterteilung: **30.07.2008**
(21) Anmeldenummer: 01112425.2
(22) Anmeldetag: 22.05.2001
(51) Int. Cl.: B25J 19/00, B25J 19/02, B25J 15/04

(54) **Handflansch einer Roboterhand mit einem Anbauteil zur Aufnahme eines Hilfgeräts**
Flange for a robot hand with an extension for mounting an accessory
Bride pour une main de robot pourvue d'une extension pour le montage d'un accessoire

(30) Priorität: 27.05.2000 DE 20009543 U
(43) Veröffentlichungstag der Anmeldung: 19.12.2001
(73) Patentinhaber: KUKA Roboter GmbH, 86165 Augsburg (DE)
(72) Erfinder: Hietmann, Gerhard, 86405 Meitingen (DE); Rawiel, Gerd, 86157 Augsburg (DE); Markert, Joachim, 86163 Augsburg (DE)
(74) Vertreter: Lempert, Jost

(56) Entgegenhaltungen:
- EP-A- 1 029 638
- DE-U- 29 902 947
- US-A- 5 572 103
- US-A- 5 768 768
- PATENT ABSTRACTS OF JAPAN vol. 1997, no. 10, 31. Oktober 1997 (1997-10-31) -& JP 09 150383 A (MEIDENSHA CORP), 10. Juni 1997 (1997-06-10)

## Beschreibung

Die Erfindung betrifft einen Handflansch einer Roboterhand mit einem Anbauteil.

Beim Anbau von Hilfsgeräten, wie Sensoren, Zusatz- oder Alternativwerkzeugen zum eigentlichen Werkzeug an einer Roboterhand oder aber am eigentlichen Werkzeug sind bisher immer aufwendige Hilfskonstruktionen erforderlich, die vermessen und kalibriert werden müssen, wobei der Tausch solcher Hilfsgeräte mit dem Verlust der Kalibrierung verbunden ist, so dass bei erneuter Anbringung eines Hilfsgeräts eine erneute Kalibrierung erforderlich ist. Montage und Demontage derartiger Teile sind daher sehr zeitaufwendig und ihre Solllage ist nur beschränkt reproduzierbar.

Dies gilt insbesondere, wenn zur Positionsermittlung des Handflansches bzw. des von ihnen getragenen Werkzeugs ein Messkörper vorzusehen ist, der von einem separaten Sensor, mit dem Positionen an einem Werkstück gemessen werden, unter einem bestimmten begrenzten Winkelbereich erscheinen soll, so dass der Messkörper in reproduzierbarer und bekannter Weise verstellbar ausgebildet sein muss.

Die US 5,768,768 zeigt einen SCARA-Roboter, bei dem am Außenumfang einer Hohlwellenführung eine ringförmige Werkzeugplatte mittels eines zylinderförmigen geteilten Passrings über an diesem angeordnete Befestigungsblöcke kraftschlüssig und damit bei Lösen in axialer Richtung verschiebbar verspannt ist. Die horizontal angeordnete ringförmige Werkzeugplatte weist an ihrem Umfang Durchbrüche auf, an denen einzelne Arbeitswerkzeuge befestigt sind.

Nachteilig ist, dass die Werkzeugplatte aufgrund der lediglich kraftschlüssigen Verspannung sich im robusten Betrieb des Roboters lösen und schon bei geringster Lockerung der Verspannung axial verschieben kann, was zu Fehlbearbeitungen führen kann, umso mehr, als hier Arbeitswerkzeuge befestigt sind.

Die lediglich nachveröffentlichte EP 1 029 638 A1 zeigt einen Roboter mit einem am Handflansch in einer Nut festgelegten Schlauchhalter.

Der Erfindung liegt die Aufgabe zugrunde, einen Handflansch eines Roboters dahingehend auszubilden, dass unter Vermeidung der oben genannten Nachteile an ihm Hilfsgeräte in fester Axialposition reproduzierbar unter Beibehaltung einer angularen Verstellbarkeit festlegbar sind, wobei das Hilfsgerät kein Schlauchhalter ist.

Erfindungsgemäß wird die genannte Aufgabe mit einem Handflansch nach dem Anspruch 1 gelöst.

Die Montage und Demontage des Hilfsgeräts in einer bestimmten Position aber auch in unterschiedlichen aber vorgegeben Positionen lässt sich zeitsparend reproduzieren, in dem von vorneherein an einer vorgegebene, insbesondere axial festen Position ein Anbauteil, das das Hilfsgerät trägt, festgelegt ist.

Gemäß einer bevorzugten Ausgestaltung ist dabei vorgesehen, dass das Hilfsgerät lösbar am Handflansch befestigt ist. In Weiterbildung kann vorgesehen sein, dass das Anbauteil als Befestigungsring ausgebildet ist.

Der Vorteil der Erfindung besteht hauptsächlich im Wegfall des Vermessungsaufwands, da die Verbindungsvorrichtungen am Ring kalibrierte Anschlussmaße im Verhältnis zum Handflansch aufweisen. Wird ein Gerät angebracht, dessen Wirkungspunkt oder -linie - bei einem optischen Sensor wie einer CCD Camera sind dies die optische Achse und die Bild-ebene - eine bereits bekannte Lage gegenüber der Montagevorrichtung (Anschraubfläche, Anschraublöcher, Profilfuß etc.) aufweist, wird eine Vermessung überflüssig. Dies ist von besonderem Gewicht bei häufigem Tausch.

Weitere Vorteile und Merkmale der Erfindung ergeben sich aus den Ansprüchen aus der nachfolgenden Beschreibung, in der ein Ausführungsbeispiel der Erfindung unter Bezugnahme auf die Zeichnungen im einzelnen erläutert ist. Dabei zeigt:

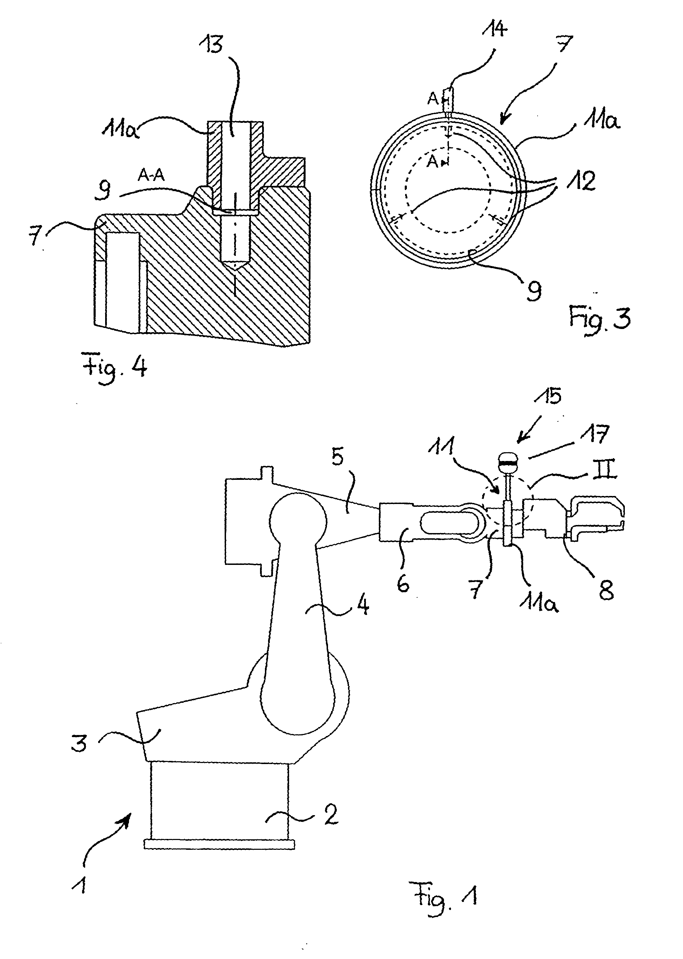

- Fig. 1: einen Roboter mit einem erfindungsgemäß ausgebildeten Handflansch in Seitenansicht;
- Fig. 2: eine perspektivische Gesamtdarstellung eines Anbauteils mit einem Hilfsgerät in Form eines Meßkörpers
- Fig. 3: eine vergrößerte Darstellung des Bereichs II der Fig. 1;
- Fig. 4: Fig. 3 einen Schnitt entsprechend A-A der Fig. 2.

Der erfindungsgemäß ausgebildete Roboter 1 weist die üblichen wesentlichen mechanischen Teile auf: Sockel 2, Karussell 3, Schwinge 4, Roboterarm 5, Hand 6 mit Handflansch 7, an dem ein Werkzeug 8 in Form einer Schweißzange befestigt ist.

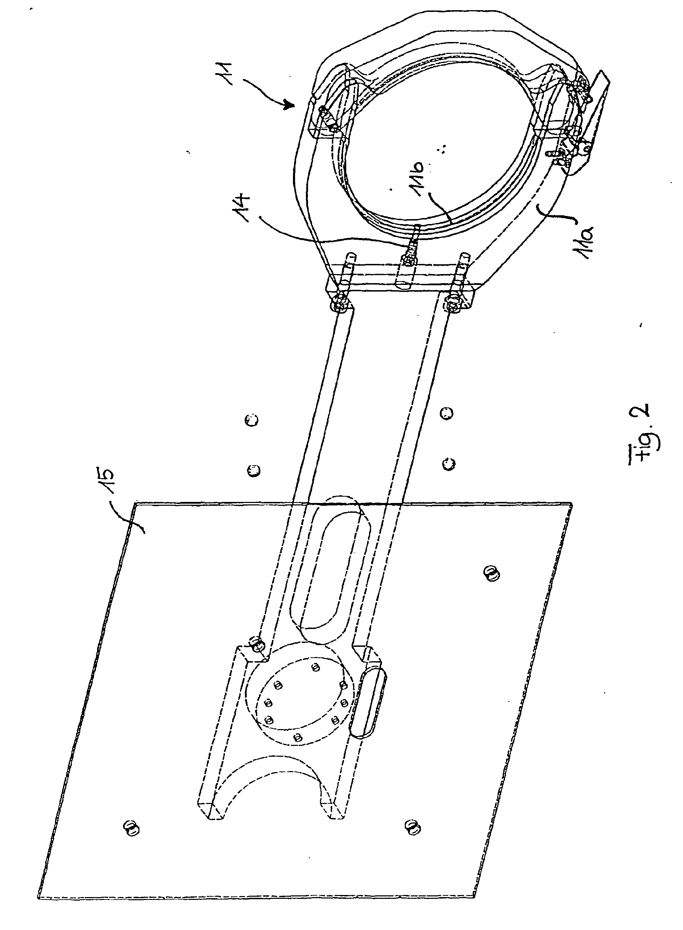

Der erfindungsgemäße ausgebildete Handflansch 7 weist eine Umfangsnut 9 auf, in der ein Anbauteil 11 mit einem Befestigungsring 11a angeordnet ist. Der Befestigungsring 11 ist zur Montage/Demontage zwangsläufig teilbar oder zu öffnen. Der Befestigungsring 11a ist über Bohrungen 12 am Grund der Nut 9 des Handflansches 7 an diesen festgelegt. Der Befestigungsring 11a ist hier als Klappschelle ausgebildet (Fig. 2).

Der Befestigungsring 11a weist eine Bohrung 13 zur Aufnahme eines Steckteils 14 eines Hilfsgeräts 15, wie einen Messkörper eines Sensors oder eines Zusatz- oder Alternativwerkzeuges zum eigentlichen Werkzeug 8 auf.

Der Befestigungsring 11a ist grundsätzlich durchdrehbar. Die Fixierung in einer bestimmten Winkelstellung erfolgt durch Absteckung mittels eines Stiftes, wie des Steckteils 14, der radial durch eine Bohrung 13 im Ring gesteckt wird und in eine (die Winkelposition bestimmende) Bohrung 12 im Handflansch 7 eintaucht. Die Absteckung kann dabei sowohl manuell erfolgen als auch durch federnde Lagerung des Stiftes 14 im Ring 11a, wobei der Stift 14 bei Drehung des Rings 11a automatisch in die nächste Bohrung im Handflansch 7 taucht. Eine Befestigung des Rings durch Schrauben findet nicht statt.

Die dargestellten drei Bohrungen sind nur beispielhaft zu verstehen; zur vollen Nutzung der Möglichkeiten können zahlreiche Bohrungen z.B. in 15 Grad-Schritten vorgesehen werden.

Auf der Innenseite des Rings ist ein erhabener Ringvorsprung 11b als "Feder" ausgebildet, der in die Nut am Umfang des Handflansches zur Bildung einer Nut-Feder-Verbindung eintaucht. Nut und Feder bilden dabei in axialer Richtung eine Passung, die für eine exakte axiale Fixierung sorgt. Nach dem Schließen des Rings liegt dieser am Umfang des Handflansches form- und kraftschlüssig an.

### Bezugszeichenliste

- 1: Roboter
- 2: Sockel
- 3: Karussell
- 4: Schwinge
- 5: Roboterarm
- 6: Hand
- 7: Handflansch
- 8: Werkzeug
- 9: Umfangsnut
- 11: Befestigungsring
- 12: Bohrungen
- 13: Bohrung
- 14: Steckteil
- 15: Hilfsgerät

## Patentansprüche

1. Handflansch einer Roboterhand mit einem Anbauteil, wobei der Handflansch (7) eine Umfangsnut (9) aufweist, in der das Anbauteil (11) gehalten ist und das Anbauteil (11) ein Hilfsgerät (18), wie einen Messkörper, einen Sensor oder ein Zusatz- oder Hilfswerkzeug trägt, wobei das Hilfsgerät kein Schlauchhalter ist.

2. Handflansch nach Anspruch 1, **dadurch gekennzeichnet, dass** das Hilfsgerät (18) lösbar am Handflansch (7) befestigt ist.

3. Handflansch nach Anspruch 1 oder 2, **dadurch gekennzeichnet, dass** das Anbauteil (11) einen Befestigungsring (11a) aufweist.

4. Handflansch nach Anspruch 3, **gekennzeichnet durch** einen inneren Ringvorsprung (11b) am Befestigungsring (11a) der mit der Umfangsnut (9) eine Nut-Feder-Verbindung bildet.

5. Handflansch nach einem der Ansprüche 3 und 4, **dadurch gekennzeichnet, dass** der Befestigungsring (11a) teilbar bzw. zu öffnen ist.

6. Handflansch nach Anspruch 5, **dadurch gekennzeichnet, dass** der Befestigungsring als Klappschelle ausgebildet ist.

7. Handflansch nach einem der Ansprüche 1 bis 6, **dadurch gekennzeichnet, dass** an seinem Umfang eine Vielzahl von Bohrungen (12) zur drehfesten Verlagerung des Anbauteils (11) vorgesehen sind.

8. Handflansch nach Anspruch 7, **dadurch gekennzeichnet, dass** die Fixierung des Anbauteils (11) in eine bestimmte Winkelstellung durch Hindurchstecken eines Stiftes (14) in eine der Bohrungen (12) erfolgt.

9. Handflansch nach Anspruch 8, **dadurch gekennzeichnet, dass** der Stift (14) am Anbauteil (11) unter radial nach innen wirkender Federkraft elastisch gelagert ist.

## Claims

1. A hand flange for a robot hand with an attachment part, the hand flange (7) comprising a circumferential groove (9) in which the attachment part (11) is held and the attachment part bearing an auxiliary device (18), such as a measurement body, a sensor or an additional or auxiliary tool, the auxiliary device not being a tube retainer.

2. A hand flange according to claim 1, **characterised in that** the auxiliary device (18) is fastened detachably to the hand flange (7).

3. A hand flange according to claim 1 or claim 2, **characterised in that** the attachment part (11) comprises a mounting ring (11a).

4. A hand flange according to claim 3, **characterised by** an inner annular projection (11b) on the mounting ring (11a), which forms a tongue and groove joint with the circumferential groove (9).

5. A hand flange according to either one of claims 3 and 4, **characterised in that** the mounting ring (11a) is partable or designed to be opened.

6. A hand flange according to claim 5, **characterised in that** the mounting ring is configured as a toggle clamp.

7. A hand flange according to any one of claims 1 to 6, **characterised in that** a plurality of bores (12) are provided around its circumference for non-rotatable repositioning of the attachment part (11).

8. A hand flange according to claim 7, **characterised in that** the attachment part (11) is fixed in a particular angular position by inserting a pin (14) through into one of the bores (12).

9. A hand flange according to claim 8, **characterised in that** the pin (14) is mounted resiliently on the attachment part (11) under radially inwardly acting spring force.

## Revendications

1. Bride d'une main de robot avec une pièce rapportée, ladite bride (7) présentant une rainure circonférentielle (9), dans laquelle est tenue la pièce rapportée (11) et la pièce rapportée (11) portant un appareil auxiliaire (18), tel un instrument de mesure, un capteur ou un outil complémentaire ou auxiliaire, l'appareil auxiliaire n'étant pas un porte-tuyau.

2. Bride selon la revendication 1, **caractérisée en ce que** l'appareil auxiliaire (18) est fixé par un assemblage démontable à la bride (7).

3. Bride selon une des revendications 1 ou 2, **caractérisée en ce que** la pièce rapportée (11) présente une collerette de fixation (11a).

4. Bride selon la revendication 3, **caractérisée par** un porte-à-faux (11b) intérieur sur le pourtour de la collerette de fixation (11a), lequel porte-à-faux forme avec la rainure circonférentielle (9) un assemblage par languette et rainure.

5. Bride selon une des revendications 3 et 4, **caractérisée en ce que** la collerette de fixation (11a) est sécable ou se laisse ouvrir.

6. Bride selon la revendication 5, **caractérisée en ce que** la collerette de fixation se présente sous forme d'un collier rabattable.

7. Bride selon une des revendications 1 à 6, **caractérisée en ce qu'**un grand nombre d'alésages (12) sont prévus sur sa circonférence pour le décalage résistant à la torsion de la pièce rapportée (11).

8. Bride selon la revendication 7, **caractérisée en ce que** la fixation de la pièce rapportée (11) dans un certain angle a lieu en insérant une broche (14) à travers un des alésages (12).

9. Bride selon la revendication 8, **caractérisée en ce que** la broche (14) est logée de façon élastique sur la pièce rapportée (11) sous l'effet d'une force ressort radiale agissant vers l'intérieur.
